# FASCICULE DE BREVET EUROPEEN

(11) **EP 2 411 325 B1**
(45) Date de publication et mention de la délivrance du brevet: **05.04.2017**
(21) Numéro de dépôt: 10710340.0
(22) Date de dépôt: 25.03.2010
(51) Int. Cl.: C01B 25/24, B01J 19/26, B01J 19/30, B01J 19/32, B01J 8/02, C08G 79/04

(54) **PROCÉDÉ ET DISPOSITIF DE PRODUCTION D'ACIDE POLYPHOSPHORIQUE**
VERFAHREN UND VORRICHTUNG ZUR HERSTELLUNG VON POLYPHOSPHORSÄURE
METHOD AND DEVICE FOR PRODUCING POLYPHOSPHORIC ACID

(30) Priorité: 26.03.2009 BE 200900186
(43) Date de publication de la demande: 01.02.2012
(73) Titulaire: Prayon Technologies, 4480 Engis (BE)
(72) Inventeur: GERMEAU, Alain, B-1160 Auderghem (BE); HEPTIA, Bernard, B-4520 Wanze (BE)
(74) Mandataire: Coulon, Ludivine
(86) Numéro de dépôt international: PCT/EP2010/053947
(87) Numéro de publication internationale: WO 2010/108991

(56) Documents cités:
- WO-A-03/014017
- FR-A- 1 399 421
- US-A- 3 272 597

## Description

La présente invention se rapporte à un procédé de production d'acide polyphosphorique à partir de solutions d'acide orthophosphorique comprenant une combustion d'un combustible en présence d'air de combustion dans une chambre dite de combustion, présentant une partie supérieure et une partie inférieure, la combustion ayant lieu dans ladite partie supérieure pour y former une flamme et des gaz de combustion.

L'acide polyphosphorique est un oligomère d'acide phosphorique comprenant des molécules selon l'une ou l'autre des formules structurelles

PₙO₃ₙ₊₁⁽ⁿ⁺²⁾⁻

dans laquelle n est un nombre supérieur à 1, ou

P₂O₅.X(O²⁻),

dans laquelle X est compris entre 0 et 1. Typiquement, l'acide polyphosphorique présente un poids moléculaire moyen compris entre 170 et 1.500 unités de poids atomique.

L'acide polyphosphorique est généralement obtenu par une déshydratation et une polymérisation d'acide orthophosphorique relativement pur et est utilisé dans diverses applications telles que la pétrochimie, les pigments organiques et la pharmaceutique, principalement dans les réactions de cyclisation, et encore bien d'autres.

La réaction de polymérisation de l'acide phosphorique en acide polyphosphorique est également appelée réaction de polymérisation-condensation puisque lorsque les molécules d'acide phosphorique s'assemblent pour former ledit oligomère, de l'eau est générée.

Dans la réaction de condensation d'acide phosphorique, il est nécessaire d'apporter des calories pour permettre cette condensation. Des calories peuvent être apportées de différentes manières telles que par des gaz chauds générés par la combustion de combustible, des électrodes permettant un chauffage direct de la solution d'acide phosphorique dans lequel elles sont immergées. Dans ce cas, les parois du conteneur d'acide phosphorique jouent le rôle de l'autre électrode. Les calories peuvent être également fournies par conduction au travers de parois comme par exemple les parois du réacteur.

A titre d'exemple, on peut citer le brevet US 4,296,082 qui propose des réacteurs en graphite chauffés électriquement ou le brevet EP 996587 qui décrit un procédé permettant de produire de l'acide polyphosphorique en fournissant de l'énergie par micro-ondes. Enfin, le brevet EP 1421030 décrit une colonne à empilage dans laquelle l'acide, alimenté en tête, circule à contre-courant avec des gaz chauds alimentés en bas de colonne.

Malheureusement, tous ces procédés et dispositifs proposés produisent de nombreux polluants et sont très contraignants pour le matériel utilisé.

En effet, à ce jour, les unités industrielles produisant de l'acide polyphosphorique à partir d'acide phosphorique par voie humide sont toutes confrontées à certains problèmes tels que des coûts d'entretien importants provoqués par des phénomènes de corrosion, des rejets excessifs d'effluents gazeux vers l'environnement ainsi qu'à la flambée du prix de l'énergie puisque tous ces procédés sont de gros consommateurs d'énergie tout en ne présentant pas toujours une grande efficience énergétique. Les rejets excessifs d'effluents gazeux vers l'environnement sont entre autres dus au fait que l'acide phosphorique utilisé contient certains contaminants tels que des traces d'acide sulfurique provenant de l'attaque sulfurique du minerai de phosphate ainsi que divers composés fluorés notamment HF provenant du fluor contenu dans ce même minerai de phosphate. Il est donc un but de l'invention de procurer un nouveau procédé permettant de bénéficier d'une grande efficacité énergétique, de limiter de façon drastique l'impact environnemental, de fournir un dispositif résistant aux conditions opératoires très sévères permettant de limiter les coûts d'entretien et d'instaurer une durabilité d'équipement et enfin d'assurer la production d'un acide polyphosphorique de qualité et donc conçu pour éviter les contaminations de l'acide phosphorique lors du processus de fabrication.

Pour résoudre ce problème, il était d'abord nécessaire de trouver un matériau résistant aux conditions de service et en particulier à la température d'environ 650°C qu'il est nécessaire d'atteindre pour produire les qualités d'acide polyphosphorique les plus concentrés. A cet effet, trois matériaux ont été retenus suite aux essais par transfert conductif menés dans un four électrique. Il s'agit du carbone vitreux, du graphite revêtu de carbone pyrolytique et du carbure de silicium. Malheureusement, pour des raisons techniques, aucun de ces trois matériaux carbonés ou à base de silice n'a pu être retenu.

Dès lors, puisqu'aucun matériau permettant de réaliser un transfert d'énergie par conduction via des parois d'appareil ou de réacteur réalisé dans un de ces trois matériaux n'a pu être mis en oeuvre, il a été nécessaire de trouver un autre moyen pour transférer à l'acide phosphorique, l'énergie nécessaire à sa polymérisation. Dès lors, il a été imaginé d'effectuer le transfert de chaleur dans une colonne à l'aide de gaz chaud circulant de bas en haut à contre-courant avec l'acide phosphorique alimenté en tête. Toutefois, cette technique n'a pas été retenue puisque, bien que favorable d'un point de vue énergétique, il est nécessaire d'appliquer une température élevée sur toute la hauteur de colonne et ce procédé impose donc de très lourdes contraintes sur le matériel mettant en péril la durabilité de l'installation, ce qui potentiellement peut générer des contaminations de l'acide.

On connaît aussi un dispositif pour produire des acides polyphosphoriques supérieurs à partir d'acides polyphosphoriques inférieurs comprenant une zone de combustion supérieure, dans laquelle une flamme est produite par la combustion de phosphore élémentaire et les parois du dispositif sont protégées par un film d'acide polyphosphorique inférieur refroidi, introduit au haut du dispositif, et une zone d'absorption inférieure, dans laquelle le film précité est atomisé dans le courant gazeux contenant du P₂O₅ résultant de la combustion précitée (US-3272597).

L'invention a donc pour but de pallier les inconvénients de l'état de la technique en procurant, pour résoudre ce problème, un procédé tel qu'indiqué au début, et donc comprenant :
a) comme indiqué au début, une combustion d'un combustible en présence d'air de combustion dans une chambre dite de combustion, présentant une partie supérieure et une partie inférieure, la combustion ayant lieu dans ladite partie supérieure, pour y former une flamme, et des gaz de combustion,
   et comprenant en outre :
b) une pulvérisation d'un fluide de pulvérisation comprenant de l'acide orthophosphorique dans ladite flamme produite dans ladite partie supérieure de la chambre de combustion, avec une polymérisation-condensation dudit acide orthophosphorique pour former un acide polyphosphorique sous forme de brouillard d'acide accompagné d'une formation de gaz qui se mélangent aux gaz de combustion pour atteindre une température prédéterminée, ledit mélange provoquant un abaissement brutal de la température des gaz de combustion,
c) une séparation dudit brouillard d'acide polyphosphorique et dudit mélange de gaz,
d) une collecte dudit acide polyphosphorique ainsi formé au bas de ladite chambre de combustion dans une cuve, et
e) une sortie dudit mélange de gaz dans ladite partie inférieure de ladite chambre de combustion mais séparée de ladite collecte d'acide polyphosphorique.

Par les termes "partie supérieure" de la chambre de combustion, on entend le ciel et les parties supérieures latérales de la chambre de combustion. La flamme produite dans la chambre de combustion étant dès lors orientée vers la bas ou latéralement. De même par les termes "formation d'une flamme", il est bien entendu que ceci peut comprendre éventuellement la formation de plusieurs flammes par plusieurs bruleurs situés dans une partie supérieure de la chambre de combustion, par exemple tous latéralement.

Comme on peut le constater, dans le procédé selon l'invention, la flamme initialement produite par le bruleur (à l'étape de combustion) peut atteindre une température d'environ 1700 °C. Lorsque le fluide de pulvérisation comprenant de l'acide orthophosphorique est pulvérisé dans ladite flamme, la température de la flamme est alors réduite à une température maximale de 650°C, température qu'il convient de conserver pour obtenir les acides polyphosphoriques à haute concentration (87%).. Ainsi, c'est l'élimination de l'eau de dilution suivi de l'étape de polymérisation-condensation qui enlève l'eau de constitution de l'acide orthophosphorique qui a pour résultat un abaissement brutal de la température des gaz de combustion lors du mélange avec les gaz contenant l'eau. Les gaz de combustion initialement à 1700°C sont brutalement refroidis pour atteindre la température maximale de 650°C, et de préférence entre 350 et 650°C en fonction de la concentration de l'acide polyphosphorique (76 à 87 % P₂O₅). Dès lors, le matériel subit moins de contrainte que dans un réacteur à contre-courant. Bien entendu, lorsque la quantité d'acide orthophosphorique est déterminée en fonction de la concentration en acide polyphosphorique que l'on souhaite atteindre et donc en fonction de la température prédéterminée que l'on souhaite atteindre, il y a lieu de tenir compte du refroidissement de la température de flamme qui se produit lors de la pulvérisation, même si la pulvérisation contribue dans une moindre mesure à ce refroidissement..

Dans une forme de réalisation avantageuse selon l'invention, ledit fluide de pulvérisation comprenant de l'acide orthophosphorique est pulvérisé dans ladite flamme en présence d'un fluide secondaire, en particulier, un gaz inerte, de préférence de l'azote. L'azote ainsi introduit en même temps que l'acide phosphorique permet une pulvérisation de celui-ci de façon optimale dans la chambre de combustion, au niveau du brûleur sans apporter de surplus d'oxygène qui pourrait oxyder les matériaux du réacteur déjà largement sollicité.

Avantageusement, lors de la combustion, la quantité d'air de combustion est stoechiométrique (rapport air/gaz naturel = 10) par rapport à la quantité de combustible, de préférence du gaz naturel, afin de réduire au maximum la teneur en oxygène des gaz chauds et de réduire les pertes énergétiques. Dès lors la flamme obtenue a une température plus proche des 1700°C, et lors de l'injection de l'acide, suivi de la réaction de polymérisation-condensation, la température est de 650°C maximum.

Dans une variante avantageuse, le procédé comprend en outre un soutirage de l'acide polyphosphorique collecté dans ladite cuve, un échange de chaleur permettant le refroidissement de l'acide polyphosphorique ainsi soutiré et une alimentation de ladite cuve en acide polyphosphorique refroidi. Dès lors, ces étapes permettent d'obtenir une boucle de recirculation à débit important d'acide polyphosphorique refroidi permettant d'abaisser fortement la température de l'acide phosphorique produit d'une température d'environ 350 à 650°C en fonction de la concentration en P₂O₅ à une température entre 100 et 120°C. En effet, la température de l'acide polyphosphorique collecté doit être maintenue entre 100°C et 120°C afin d'assurer la tenue des matériaux et d'éviter que l'acide polyphosphorique ne se fige dans cette partie de l'installation.

Dans une forme de réalisation avantageuse du procédé selon l'invention, ladite alimentation en acide polyphosphorique refroidi alimente également un réservoir de stockage. En effet, puisque cette température est optimale d'une part pour assurer la tenue des matériaux et d'autre part pour éviter le figeage de l'acide polyphosphorique, c'est à cet endroit qu'il est avantageux de prélever une partie de l'acide polyphosphorique produit pour le stocker dans un réservoir de stockage.

Dans une forme de réalisation préférentielle, ledit mélange de gaz à la sortie de la chambre de combustion est appauvri en P₂O₅ par refroidissement contrôlé pour une récupération additionnelle d'acide polyphosphorique. Donc ledit mélange de gaz qui sort de la chambre de combustion et qui contient encore du P₄O₁₀ sous forme de gaz et de fines gouttelettes d'acide polyphosphorique est soumis à un refroidissement contrôlé qui, tout en le maintenant à une température légèrement supérieure à la température de rosée, permet de l'appauvrir en P₂O₅ grâce à un système mécanique approprié. Ceci permet une récupération additionnelle d'acide polyphosphorique qui peut alors être envoyé vers le réservoir d'acide polyphosphorique soutiré à la chambre de combustion. Dans une forme de réalisation avantageuse du procédé selon l'invention, ledit mélange de gaz à la sortie de la chambre de combustion est lavé par une solution de lavage et refroidis à une température comprise entre 35 et 50°C et de préférence d'environ 40°C. Ce lavage peut avoir lieu directement sur le mélange de gaz à la sortie de la chambre de combustion ou alors sur le mélange de gaz ayant subi l'étape préalable d'appauvrissement susdite. Lors du lavage, des composés solubles gazeux tels que les gaz fluorés, le SOₓ et les derniers entraînements de P₂O₅ sont récoltés et entraînés par la solution de lavage aqueuse dans laquelle il sont dissous. Cette phase aqueuse est alors récupérée dans un bac de collecte et peut alors être réinjectée dans la tour de lavage pour laver des gaz chauds et/ou une partie peut être soutirée pour être, par exemple, utilisée et/ou recyclée dans d'autres procédés tels que, dans un procédé de production d'acide orthophosphorique à partir d'un minerai de phosphate dans lequel l'acide sulfurique est utilisé. Dans ce cas, un appoint d'eau permettant d'une part de ramener la concentration de la solution de lavage en dessous de la saturation et de diminuer la température de la solution de lavage résiduelle peut être approprié. Dès lors, le mélange de gaz ainsi refroidi ne contient normalement plus que de la vapeur d'eau, de l'azote et du CO₂ et est alors rejeté à l'atmosphère.

Dans une variante selon l'invention, les gaz chauds dudit mélange de gaz sorti de la chambre de combustion sont condensés par voie indirecte, par exemple dans un condensateur indirect. Cette condensation peut avoir lieu directement sur ledit mélange de gaz sorti de la chambre de combustion ou alors sur ledit mélange de gaz ayant subi l'étape préalable d'appauvrissement susdite. Le résultat de cette condensation indirecte est également la production d'une solution aqueuse acide dans laquelle se retrouve des gaz fluorés, du SOₓ et les derniers entraînements de P₂O₅. Les eaux acidulées sont alors récupérés par exemple également dans une étape de production d'acide phosphorique à l'aide de minerai de phosphate. Dès lors, puisque la phase aqueuse est récupérée dans d'autres étapes de procédé, le procédé selon l'invention ne relargue aucun déchet liquide ni gazeux contenant des composés indésirables vers l'environnement.

Dans une autre forme de réalisation du procédé selon l'invention, le procédé comprend en outre les étapes de
- mise en contact dudit mélange de gaz à la sortie de la chambre de combustion, éventuellement préalablement audit lavage ou à ladite condensation ou éventuellement après l'appauvrissement susdit, avec ledit acide orthophosphorique, avant sa pulvérisation dans ladite chambre de combustion,
- échange de chaleur entre ledit acide orthophosphorique et ledit mélange de gaz, et
- récupération d'éventuelles gouttelettes dudit brouillard d'acide polyphosphorique emmenées par ledit mélange de gaz à la sortie de ce dernier de la chambre de combustion.

Dès lors, l'acide orthophosphorique à polymériser serait utilisé comme premier liquide de lavage des gaz chauds dans un contacteur gaz acide qui permet d'une part de préchauffer l'acide à polymériser par le contact avec les gaz chauds dudit mélange de gaz à la sortie de la chambre de combustion avant sa pulvérisation dans la flamme, ce qui donne un gain énergétique et une récupération d'énergie du gaz chauffé et permet, d'autre part, de récupérer des gouttelettes d'acide polyphosphorique formées par polymérisation dans la chambre de combustion, qui pourraient avoir été entraînées dans les gaz chauds et ainsi de les réintroduire dans ladite chambre de combustion.

Bien entendu, la température des gaz chauds quittant le contacteur gaz-acide ne peut-être inférieure à la température de rosée dans l'acide orthophosphorique sans quoi une partie de l'eau éliminée dans la chambre de combustion et présente dans les gaz chauds dudit mélange serait condensée à nouveau.

La température de l'acide orthophosphorique (contenant éventuellement un peu d'acide polyphosphorique) à la sortie dudit contacteur gaz liquide pourrait atteindre une température comprise entre 190 et 240°C avant pulvérisation, de préférence d'environ 200°C.

D'autres formes de réalisation du procédé selon l'invention sont mentionnées dans les revendications annexées.
- L'invention a également pour objet un dispositif de production d'acide polyphosphorique comprenant :une chambre de combustion présentant une partie supérieure et une partie inférieure,
- au moins un brûleur situé dans ladite partie supérieure de la chambre de combustion,
- une première entrée pour un combustible et une deuxième entrée pour un air de combustion, situées toutes deux dans ladite partie supérieure de ladite chambre de combustion et agencées pour alimenter en combustible et en air de combustion ledit au moins un brûleur, qui génère une flamme,
ce dispositif comprenant en outre
- une alimentation en fluide de pulvérisation comprenant de l'acide orthophosphorique qui est agencée pour amener ledit fluide de pulvérisation au niveau dudit au moins un brûleur, dans ladite flamme,
- des moyens de séparation permettant de séparer, d'une part, ledit acide polyphosphorique produit dans ladite chambre de combustion et, d'autre part, un mélange de gaz qui est également produit dans ladite chambre de combustion et qui entraîne ledit acide polyphosphorique, et
- une sortie d'acide polyphosphorique, au bas de ladite chambre de combustion, et une sortie dudit mélange de gaz dans ladite partie inférieure de cette chambre de combustion.

Dans une forme de réalisation avantageuse, ladite chambre de combustion présente une paroi externe et une paroi interne en carbone amorphe non imprégné entre lesquelles circule un gaz neutre. Le carbone amorphe non imprégné présente une faible conductivité thermique et permet de fonctionner avec une température de paroi de 650°C. Puisque le carbone amorphe non imprégné présente une faible conductivité thermique, la paroi interne reste chaude, et ce, même quand la polymérisation-condensation se produit. Pour mémoire, la polymérisation-condensation est accompagnée d'une élimination d'eau qui provoque un brusque abaissement de la température des gaz chauds (quenching des gaz chauds). Si la paroi était en un matériau bon conducteur thermique, on observerait l'apparition de zones plus froides qui pourraient provoquer la recondensation de la vapeur d'eau contenue dans les gaz chauds. Dès lors, la paroi en carbone amorphe non imprégné évite les points froids. Toutefois, une contre-pression d'azote ou d'un autre gaz neutre est avantageuse pour empêcher la diffusion de l'acide phosphorique ou polyphosphorique produit dans la porosité du carbone. Cette contre-pression d'azote fait office de barrage et l'azote, diffusant au travers de la porosité interne ouverte de la paroi, permet de protéger celle-ci des oxydants éventuels présents dans ledit mélange de gaz chauds.

Dans une autre forme de réalisation, la chambre de combustion comprend des parois en carbure de silicium. En outre, avantageusement, la chambre de combustion comprend une paroi interne et une paroi externe toutes deux en carbure de silicium. Entre chaque paroi, les gaz chauds dudit mélange de gaz sorti de la chambre de combustion peuvent alors circuler du bas vers le haut, à l'extérieur de la chambre de combustion avant de quitter le réacteur. Ainsi, les gaz chauds échangent leur chaleur résiduelle avec la paroi interne de la chambre de combustion pour éviter l'existence de points froids. En outre, cette forme de réalisation évite la contrainte de devoir travailler sous gaz neutre car il n'est plus nécessaire de travailler en présence de graphite et les risques d'ignition sont alors réduits. Bien que les gaz chauds dans l'enveloppe entretiennent la température dans la chambre de combustion, il est possible que ceux-ci se condensent en communiquant leur chaleur à la chambre de combustion. Dans ce cas, des moyens de récupération des condensats appropriés sont présents également et ils permettront de réinjecter les condensats soit dans la cuve de collecte, soit au niveau du brûleur en fonction de la qualité de ces condensats.

Dans une variante, lesdits moyens de séparation comprennent un dispositif statique situé dans la partie inférieure de la chambre de combustion, par exemple constitués d'une section de chambre de combustion, dans une partie inférieure, plus grande qui permet d'obtenir une perte de vitesse de gaz de combustion ou de gaz chauds. Dès lors, grâce à la perte de vitesse, les gaz effectuent un mouvement de rotation avant d'être dirigés par un déflecteur vers la sortie de gaz chauds de la chambre de combustion tandis que les petites vésicules ou gouttelettes (de densité = 2) d'acide polyphosphorique sont entrainées par la gravité vers la sortie d'acide polyphosphorique avec une trajectoire uniforme.

Dans une variante selon l'invention, le dispositif comprend en outre une cuve de collecte d'acide polyphosphorique reliée à ladite sortie d'acide polyphosphorique et présentant une tubulure de soutirage, reliée à un échangeur de chaleur, ledit échangeur de chaleur étant ensuite relié à un réservoir d'entreposage d'acide polyphosphorique et/ou d'autre part à une tubulure de recyclage d'acide polyphosphorique retournant à ladite cuve de collecte.

Comme on l'a déjà mentionné précédemment, ce dispositif permet d'obtenir une boucle de recirculation comprenant un échangeur de chaleur. Cette boucle de recirculation est mise en place afin de contrôler la température de l'acide dans la cuve qui doit être maintenue entre 100 et 120°C pour permettre d'assurer la tenue des matériaux et d'éviter que l'acide polyphosphorique ne se fige dans cette installation. Pour mémoire, l'acide polyphosphorique produit est collecté à une température comprise entre 350 et 650°C (en fonction de la concentration de l'acide polyphosphorique souhaitée. Le taux de recyclage de l'acide refroidi par rapport à l'acide produit doit être important (environ d'un facteur 20), ce qui provoque un brassage important accompagné d'un refroidissement adéquat pour atteindre la température de 100 à 120°C.

Dans une forme de réalisation avantageuse du dispositif selon l'invention, ladite sortie du mélange de gaz chauds est reliée directement ou indirectement à une tour de lavage.

Dans une variante selon l'invention, le dispositif comprend en outre un condenseur indirect, relié directement ou indirectement à ladite sortie de gaz chauds.

Que ce soit la tour de lavage ou le condenseur indirect, ces dispositifs permettent de récupérer des composés acides ou nuisibles pour l'environnement dans une solution aqueuse de lavage ou une phase aqueuse issue de la condensation qui pourra être ensuite ultérieurement réutilisée dans d'autres procédés connexes tels que par exemple la production d'acide phosphorique à partir de minerai de phosphate qui utilise de l'acide sulfurique et comprend fréquemment des composés fluorés.

Dans une variante avantageuse selon l'invention, un moyen de refroidissement contrôlé des gaz chauds relié à ladite sortie des gaz chauds de la chambre de combustion est présent. Celui-ci permet donc de refroidir de manière contrôlée les gaz chauds du mélange de gaz issu de la chambre de combustion pour récupérer encore de l'acide polyphosphorique avant que les gaz chauds ne passent dans la tour de lavage, de condensation ou autre ou toutes les combinaisons de ceux-ci.

Dans une autre forme de réalisation avantageuse, le dispositif selon l'invention comprend en outre un contacteur gaz-acide présentant, dans sa partie inférieure, une entrée du mélange de gaz chauds, reliée à ladite sortie dudit mélange de gaz chauds de la chambre de combustion, éventuellement après ledit moyen de refroidissement contrôlé, ainsi que dans sa partie supérieure, une sortie d'un mélange de gaz chauds, éventuellement reliée à ladite tour de lavage ou audit condenseur indirect lorsqu'ils sont présents, une entrée d'acide phosphorique, dans ladite partie supérieure dudit contacteur, et une sortie d'acide orthophosphorique contenant éventuellement un peu d'acide polyphosphorique entraîné par ledit acide orthophosphorique en contre-courant dudit mélange de gaz dans ladite partie inférieure.

Comme on l'a également mentionné précédemment, le contacteur gaz liquide permet de récupérer la chaleur des gaz chauds dudit mélange de gaz pour préchauffer l'acide orthophosphorique avant introduction dans la chambre de combustion et permet la récupération d'éventuelles gouttelettes d'acide qui pourraient avoir été entraînées par ledit mélange de gaz chauds et les réintroduire en même temps que l'acide orthophosphorique dans la chambre de combustion.

Il est entendu que la température des gaz chauds dudit mélange quittant le contacteur gaz-acide ne peut être inférieure à la température de rosée dans l'acide orthophosphorique (sans quoi l'eau vaporisée pendant la polymérisation serait recondensée).

Dans une forme avantageuse de réalisation, ledit contacteur gaz-acide comprend en outre un matériau de remplissage, au travers duquel percole l'acide orthophosphorique, qui est disposé sur un support perforé ou analogue.

Dans une variante, ledit contacteur gaz-acide comprend un diffuseur de gaz qui présente une partie supérieure sensiblement perméable aux gaz et une partie inférieure sensiblement perméable aux liquides et éventuellement, dans sa partie supérieure, un débrumiseur.

Dans une autre forme de réalisation, ladite sortie d'acide orthophosphorique dudit contacteur gaz acide est reliée à ladite alimentation en fluide de pulvérisation de ladite chambre de combustion.

Dans une variante, le dispositif selon l'invention comprend également un réservoir d'entreposage d'acide orthophosphorique, relié par une tubulure, soit audit contacteur gaz acide soit à ladite alimentation en fluide de pulvérisation de ladite chambre de combustion.

D'autres formes de réalisation du dispositif suivant l'invention sont mentionnées dans les revendications annexées.

D'autres caractéristiques, détails et avantages de l'invention ressortiront de la description donnée ci-après à titre non limitatif et en faisant référence aux figures annexées.

La figure 1 est un schéma de principe d'une unité pilote comprenant une chambre de combustion et un contacteur récupérateur gaz-acide.

La figure 2 est un schéma de principe d'une autre chambre de combustion selon l'invention.

Le procédé suivant l'invention est par exemple mis en oeuvre dans un dispositif tel qu'illustré comprenant une chambre de combustion 1 qui comprend un brûleur 2, une première entrée 3 pour un combustible tel que par exemple du gaz naturel, une deuxième entrée 4 pour un air de combustion. Ledit bruleur 2 alimenté par ledit combustible et ledit air de combustion, de préférence selon la quantité stoechiométrique, permet de générer une flamme, dans ce cas à orientée vers le bas à une température allant jusque 1700°C et des gaz de combustion présentant sensiblement la même température. Cette température diminue à 500-650°C lors de l'injection de l'acide et de la réaction de polymérisation-condensation. De cette façon, la teneur en oxygène des gaz de combustion est limitée au maximum.

Comme on peut le voir, la première et la deuxième entrée sont situées dans la partie supérieure également appelée ciel de la chambre de combustion 1 ou de manière sensiblement équivalente sur toute partie latérale supérieure de la chambre de combustion. La chambre de combustion 1 comprend également une alimentation en fluide de pulvérisation 5 qui permet d'amener ce fluide à la hauteur de la flamme pour le pulvériser. Le fluide de pulvérisation est constitué, entre autres, d'un mélange d'acide orthophosphorique et éventuellement d'azote pour pulvériser l'acide de façon optimale dans la chambre de combustion.

Bien entendu, d'autres fluides secondaires peuvent être utilisés tels que par exemple tout gaz neutre non inflammable. Lorsque le fluide de pulvérisation est pulvérisé dans la flamme, la réaction de polymérisation-condensation peut se produire puisque l'acide phosphorique présente une énergie suffisante à celle-ci.

La réaction de polymérisation-condensation de l'acide orthophosphorique en acide polyphosphorique se produit donc à une température supérieure à 350°C Sa formation est accompagnée d'une élimination d'eau instantanée (de constitution et de dilution de l'acide phosphorique) sous forme de vapeur qui se mélange aux gaz de combustion et à l'acide orthophosphorique gazeux pulverisé (et aux impuretés présentes). L'élimination d'eau provoque un abaissement brutal de la température des gaz chauds (de combustion et d'acide gazeux) et donc un quenching de ces derniers (dû à l'énergie nécessaire à la réaction de polymérisation-condensation). De plus, ce refroidissement brusque des gaz du mélange ainsi formé pour atteindre la température cible prédéterminée permet d'imposer des contraintes de fonctionnement du matériel moins sévère ce qui augmente considérablement la durée de vie de l'installation.

La chambre de combustion comprend également des moyens de séparation 6 qui permettent de séparer d'une part l'acide polyphosphorique produit des gaz chauds du mélange de gaz produit dans ladite chambre de combustion.

La chambre de combustion comprend, par exemple, en tant que moyen de séparation, une section inférieure plus grande qui permet d'obtenir une perte de vitesse des gaz du mélange de gaz ainsi produits. Dès lors, grâce à la perte de vitesse de ces derniers, les gaz effectuent un mouvement de rotation (d'environ 150 à 215°, de préférence d'environ 180°) tandis que les petites particules d'acide polyphosphorique, qui sont en fait des vésicules liquides de densité environ égale à 2 constituées d'acide polyphosphorique formé sont quant à elles entraînées par la gravité vers le bas, vers la sortie d'acide polyphosphorique 7.

Les gaz ayant effectué une rotation sont quant à eux éjectés par la sortie du mélange de gaz chauds 8. Comme on peut le voir, la chambre de combustion présente une paroi externe 9 et une paroi interne 10 entre laquelle est alimenté un gaz neutre 11, par exemple de l'azote. La paroi interne est de préférence en carbone amorphe non imprégné qui présente une faible conductivité thermique et donc est un bon isolant. La paroi en carbone amorphe reste donc chaude, ce qui évite l'apparition de points froids susceptibles de recondenser l'eau éliminée à l'étape de polymérisation-condensation. Le carbone amorphe non imprégné permet de fonctionner avec une température de paroi d'environ 650°C et l'azote injecté est avantageux pour empêcher la diffusion de l'acide phosphorique et/ou de l'acide polyphosphorique dans la porosité du carbone ainsi que d'éviter la présence d'oxygène chaud sur les parois en carbone qui pourraient alors s'enflammer.

Puisque la quantité d'air de combustion est stoechiométrique à la quantité de combustible et puisque l'acide orthophosphorique est pulvérisé en présence d'azote, la présence d'oxydant est déjà limitée au maximum, sans toutefois valoir 0. Dès lors, il est avantageux d'avoir ce barrage d'azote pour maintenir intactes ou presque intactes les parois internes de la chambre de combustion.

La sortie d'acide polyphosphorique 7 aboutit dans une cuve de collecte d'acide polyphosphorique 12. La cuve présente une tubulure 13 de soutirage qui est reliée à un échangeur de chaleur 14 qui est quant à lui relié, d'une part, à un réservoir d'entreposage 15 d'acide polyphosphorique gaz chauds et, d'autre part, dans la forme de réalisation illustrée, à une tubulure 16 de recyclage d'acide polyphosphorique retournant à la cuve de collecte. Dès lors, cette boucle de recirculation 13, 14, 16 est mise en place afin de contrôler la température de l'acide dans la cuve, qui doit être maintenue entre 100°C et 120°C pour permettre la résistance de matériau et d'éviter que l'acide polyphosphorique ne se fige dans cette partie de l'installation, alors que ce dernier est collecté à environ 500-650°C en fonction de la concentration en P₂O₅ dans l'acide orthophosphorique de départ. Il faut donc un brassage d'un débit important d'acide polyphosphorique produit, préalablement refroidi, pour abaisser brutalement la température de l'acide polyphosphorique produit et collecté à 500-650°C.

Dans cette forme de réalisation illustrée, ladite sortie du mélange de gaz chauds 8 est reliée à un moyen de refroidissement contrôlé 30 qui comprend un échangeur de chaleur (non illustré). Cet échangeur de chaleur diminue la température du mélange de gaz chauds à une température légèrement supérieure au point de rosée des gaz dans l'acide polyphosphorique pour récupérer de l'acide polyphosphorique qui aurait été entraîné par le mélange de gaz. La sortie du mélange de gaz chauds est également reliée à un contacteur gaz-acide 17 permettant entre-autre d'épurer les gaz chauds sortis de la chambre de combustion 1 avant leur rejet dans l'atmosphère et d'autre part de récupérer une partie de leur chaleur.

Le contacteur gaz-acide 17 comprend une entrée du mélange de gaz chauds 18 qui est reliée à ladite sortie du mélange de gaz chauds 8 de la chambre de combustion 1 dans une partie inférieure de celui-ci et une sortie du mélange de gaz chauds 23 qui se situe dans une partie supérieure du contacteur gaz-acide 17. Dès lors, les gaz chauds du mélange de gaz sortant de la chambre de combustion pénètrent dans le contacteur gaz-acide 17 et s'échappent par un mouvement ascendant vers la sortie de gaz chauds 23.

Avantageusement, la température des gaz chauds quittant le contacteur gaz-acide 17 ne peut être inférieure à la température de rosée dans l'acide orthophosphorique.

Le contacteur gaz-acide 17 comprend un diffuseur de gaz 19 qui présente une partie supérieure 20 sensiblement perméable aux gaz et une partie inférieure 21 sensiblement perméable aux liquides. Dès lors, les gaz chauds passent au travers de la partie supérieure 20 tandis que d'éventuelles parties liquides, entraînées par les gaz chauds sortant de la chambre de combustion, restent confinées dans le diffuseur de gaz et, soumises à la gravité, passent au travers de la partie inférieure 21. En outre, dans sa partie supérieure, le contacteur gaz-acide 17 comprend également un débrumiseur 22 qui permet de récupérer d'éventuelles gouttelettes de liquide présentes dans le gaz avant sa sortie via la sortie de gaz chauds 23.

Le contacteur gaz-acide 17 comprend également une entrée d'acide orthophosphorique 24 dans une partie supérieure et une sortie d'acide phosphorique 25 (acide orthophosphorique et polyphosphorique résiduel) dans une partie inférieure. Dès lors, l'acide orthophosphorique circule du haut vers le bas dans le contacteur gaz-acide 17 et permet, d'une part, d'être préchauffé par les gaz chauds qui circulent, quant à eux, de bas en haut et, d'autre part, de récupérer d'éventuelles gouttelettes d'acide polyphosphorique initialement formées dans la chambre de combustion 1 mais qui pourraient avoir été entraînées par les gaz chauds.

Le contacteur gaz-acide 17 comprend également un matériau de remplissage 26, au travers duquel percole l'acide phosphorique alimenté par l'entrée d'acide orthophosphorique 24, qui est disposé sur un support perforé 27 par exemple une grille de support. De préférence, le matériau de remplissage 26 emmagasine la chaleur provenant des gaz chauds. La sortie d'acide phosphorique 25 du contacteur gaz-acide 17 est reliée à ladite alimentation en fluide de pulvérisation 5 de la chambre de combustion 1. Dès lors, l'acide phosphorique entrant dans la chambre de combustion via le fluide de pulvérisation est préchauffé par les gaz chauds à une température comprise entre 190 et 240°C, et de préférence d'environ 200°C.

Dans une forme de réalisation particulièrement avantageuse, l'acide phosphorique provient, avant son entrée dans le récupérateur gaz-acide 17 d'un réservoir d'entreposage d'acide phosphorique, relié par une tubulure au contacteur gaz-acide 17.

Dans la forme de réalisation illustrée, les gaz chauds du mélange de gaz s'échappent du contacteur gaz-acide 17 par la sortie 23 qui est reliée à une tour de lavage 31 par une entrée de gaz chauds 32 ou du mélange de gaz chauds située dans une partie inférieure de celle-ci. Comme on peut le voir, la tour de lavage 31 est alimentée en solution de lavage en différents points de celle-ci 33a, 33b, 33c. Cette solution de lavage permet d'entraîner des contaminants présents dans les gaz chauds, comme par exemple, du SOx gazeux ou des composés fluorés. Ces derniers contaminants gazeux sont alors dissous dans la solution aqueuse de lavage et forment la solution de lavage avant d'être récupérés dans un réservoir de collecte 34. Le réservoir de collecte 34, réalimente en circuit fermé la tour de lavage 31. Dès lors, les gaz s'échappant dans l'atmosphère par la sortie 35 sont exempts ou presque exempts de contaminants néfastes pour l'environnement.

Lorsqu'une partie de la solution de lavage est soutirée ou si la concentration en composés acides ou la température est trop élevée, un apport d'eau permettra de régulariser la situation en provoquant un effet de dilution entre autres.

Le réservoir 34 comprend également une sortie de solution de lavage (légèrement acidifiée) 36. Cette solution de lavage acidifiée peut dès lors servir à d'autres procédés comme par exemple l'extraction d'acide phosphorique à partir de minerai de phosphate puisque cette solution aqueuse de lavage acidifiée est principalement constituée d'acide sulfurique et de composés fluorés.

Il ressort donc clairement de ceci que le dispositif et le procédé suivant l'invention sont particulièrement peu polluants. En effet, les points froids sont évités dans la mesure du possible pour éviter la condensation et l'apport d'eau dans l'acide polyphosphorique, au niveau de la chambre de combustion, par la présence de parois en carbone amorphe non imprégné qui présentent une faible conductivité thermique. Dès lors, au lieu de perdre l'énergie de ces gaz chauds ou de rejeter des gaz trop chauds dans l'atmosphère, le dispositif suivant l'invention permet clairement de récupérer cette énergie pour préchauffer l'acide phosphorique avant son entrée dans la chambre de combustion et donc de réduire la consommation du brûleur 2.

De plus, par la présence du contacteur gaz-acide 17, du débrumiseur 22 ainsi que du diffuseur de gaz 19, il n'y a pratiquement pas de perte au niveau de l'acide polyphosphorique produit puisque tout ce qu'il est possible de récupérer dans les gaz chauds est récupéré par l'acide phosphorique qui percole au travers du contacteur gaz-acide du haut vers le bas.

Dans une forme de réalisation par exemple à très grande échelle, la tour de lavage sera remplacée par un condenseur indirect qui permet d'obtenir les mêmes résultats mais un rendement plus élevé en émission réduite de polluants.

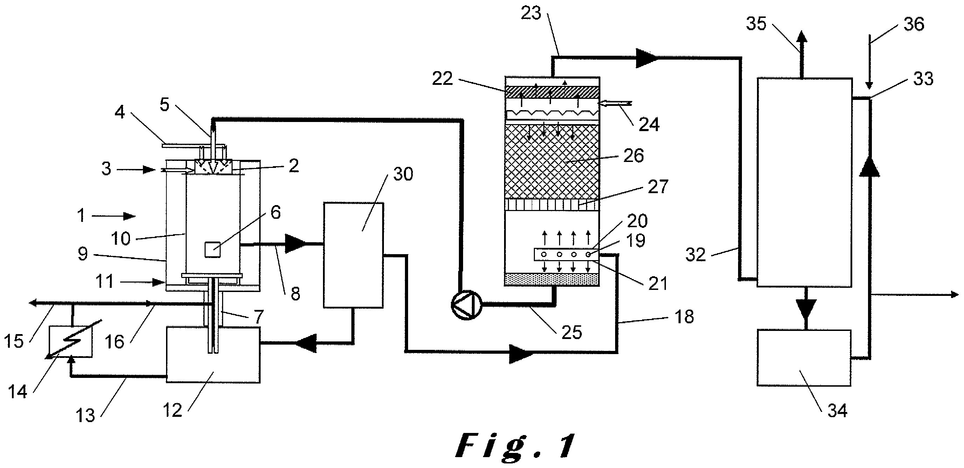

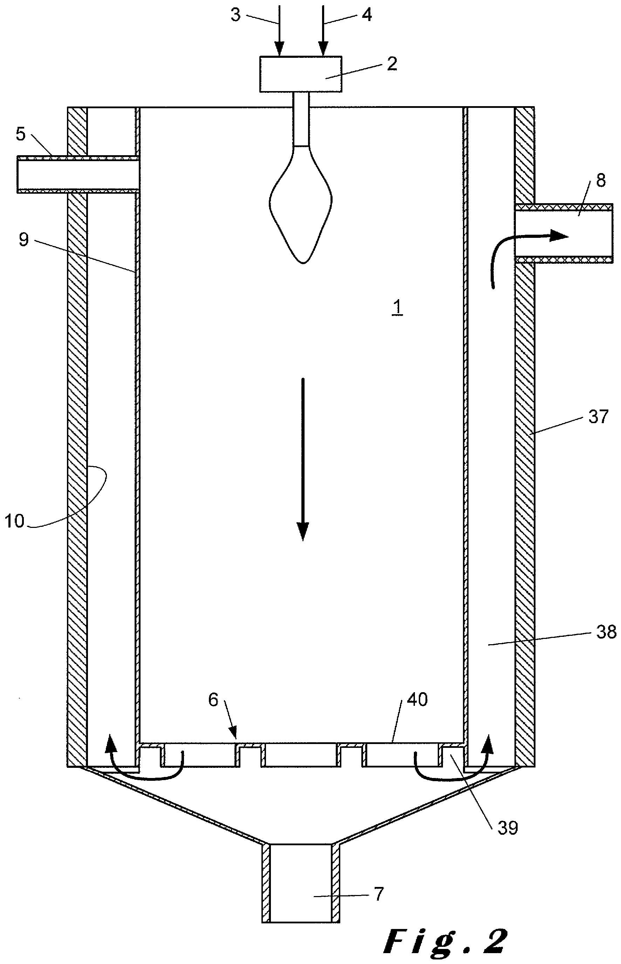

Comme on peut le voir à la figure 2, un autre type de chambre de combustion peut-être mise en oeuvre dans l'installation donnée à titre d'exemple à la figure 1. La chambre de combustion 1 illustrée comprend donc un brûleur 2, une première entrée 3 pour un combustible et une deuxième entrée 4 pour un air de combustion. La chambre de combustion 1 comprend également une alimentation en fluide de pulvérisation 5 qui permet d'amener ce fluide à la hauteur de la flamme pour le pulvériser. Le fluide de pulvérisation est constitué, entre autres, d'un mélange d'acide orthophosphorique substantiellement pur et éventuellement d'azote pour pulvériser l'acide de façon optimale dans la chambre de combustion.

La chambre de combustion 1 comprend une paroi interne 9, de préférence en carbure de silicium et une paroi externe 10 également en carbure de silicium, recouverte d'une couche 37 protectrice et isolante. Entre la paroi interne 9 et externe 10 est définie une enveloppe 38 dans laquelle les gaz chauds du mélange de gaz pourront circuler afin de chauffer la chambre de combustion 1 et ainsi éviter les points froids qui sont néfastes, comme mentionné précédemment.

La chambre de combustion comprend également des moyens de séparation 6 qui permettent de séparer d'une part l'acide polyphosphorique produit et d'autre part des gaz chauds du mélange de gaz également produits dans ladite chambre de combustion et qui entraînent ledit acide polyphosphorique. Dans cette forme de réalisation, les moyens de séparation prennent la forme d'un fond 6 de chambre de combustion percé d'orifices 40. Le fond 6 de la chambre de combustion percé d'orifices 40 repose sur des assises 39. Les gaz chauds entraînent ledit acide polyphosphorique au travers de orifices 40 et sont défléchis sur la paroi inférieure de la chambre de combustion. Dès lors, ils remontent dans l'enveloppe 38 avant de sortir par la sortie des gaz chauds 8 situées cette fois dans une partie supérieure de la chambre de combustion 1 tandis que l'acide polyphosphorique formé et ainsi entraîné quitte principalement par gravité la chambre de combustion 1 par la sortie d'acide polyphosphorique 7 en bas de la chambre de combustion 1. Bien entendu, les gaz chauds du mélange susdit entraînent une partie de l'acide polyphosphorique produit également dans l'enveloppe 38, mais comme mentionné précédemment, le dispositif selon l'invention comprend divers moyens appropriés permettant sa récupération afin d'augmenter de manière significative le rendement de production global de l'installation selon l'invention. Rappelons que les petites particules d'acide polyphosphorique produites sont en fait des vésicules liquides de densité environ égale à 2 constituées d'acide polyphosphorique formé et qu'elles sont quant à elles entraînées par la gravité vers le bas, vers la sortie d'acide polyphosphorique 7.

Les gaz ayant effectué une rotation sont quant à eux éjectés par la sortie de gaz chauds 8.

Il est bien entendu que la présente invention n'est en aucune façon limitée aux formes de réalisation décrites ci-dessus et que bien des modifications peuvent y être apportées sans sortir du cadre des revendications annexées.

## Revendications

1. Procédé de production d'acide polyphosphorique à partir de solutions d'acide orthophosphorique, comprenant :
a) une combustion d'un combustible en présence d'air de combustion dans une chambre dite de combustion (1), présentant une partie supérieure et une partie inférieure, la combustion ayant lieu dans ladite partie supérieure pour y former une flamme et des gaz de combustion,
**caractérisé en ce qu'**il comprend en outre
b) une pulvérisation d'un fluide de pulvérisation comprenant de l'acide orthophosphorique dans ladite flamme produite dans ladite partie supérieure de la chambre de combustion, avec une polymérisation-condensation dudit acide orthophosphorique pour former un acide polyphosphorique sous forme de brouillard d'acide accompagné d'une formation de gaz qui se mélangent aux gaz de combustion pour atteindre une température prédéterminée, ledit mélange provoquant un abaissement brutal de la température des gaz de combustion,
c) une séparation dudit brouillard d'acide polyphosphorique et dudit mélange de gaz,
d) une collecte dudit acide polyphosphorique ainsi formé au bas de ladite chambre de combustion (1) dans une cuve (12), et
e) une sortie dudit mélange de gaz dans ladite partie inférieure de ladite chambre de combustion (1) mais séparée de ladite collecte d'acide polyphosphorique.

2. Procédé selon la revendication 1, dans lequel ledit fluide de pulvérisation comprenant de l'acide orthophosphorique est pulvérisé dans ladite flamme en présence d'un fluide secondaire, en particulier, un gaz inerte, de préférence de l'azote.

3. Procédé selon la revendication 1 ou la revendication 2, dans lequel lors de ladite combustion, la quantité d'air de combustion est stoechiométrique par rapport à la quantité de combustible.

4. Procédé selon l'une quelconque des revendications 1 à 3, comprenant en outre un soutirage de l'acide polyphosphorique collecté, un échange de chaleur permettant le refroidissement de l'acide polyphosphorique ainsi soutiré et une alimentation de ladite cuve (12) en acide polyphosphorique refroidi.

5. Procédé selon la revendication 4, dans lequel ladite alimentation en acide polyphosphorique refroidi alimente également un réservoir de stockage (15).

6. Procédé selon l'une quelconque des revendications précédentes, dans lequel ledit mélange de gaz à la sortie de la chambre de combustion est appauvri en P₂O₅ par refroidissement contrôlé pour une récupération additionnelle d'acide polyphosphorique.

7. Procédé selon l'une quelconque des revendications 1 à 6, dans lequel ledit mélange de gaz à la sortie de la chambre de combustion, éventuellement appauvri en P₂O₅, est lavé par une solution aqueuse de lavage et refroidi à une température comprise entre 35 et 50°C.

8. Procédé selon l'une quelconque des revendications 1 à 6, dans lequel ledit mélange de gaz à la sortie de la chambre de combustion, éventuellement appauvri en P₂O₅, est condensé par voie indirecte

9. Procédé selon l'une quelconque des revendications précédentes, comprenant en outre :
- une mise en contact dudit mélange de gaz à la sortie de la chambre de combustion, éventuellement préalablement audit lavage ou à ladite condensation ou éventuellement après l'appauvrissement susdit, avec ledit acide orthophosphorique, avant sa pulvérisation dans ladite chambre de combustion (1),
- un échange de chaleur entre ledit acide orthophosphorique et ledit mélange de gaz, et
- une récupération d'éventuelles gouttelettes dudit brouillard d'acide polyphosphorique emmenées par ledit mélange de gaz à la sortie de ce dernier de la chambre de combustion.

10. Procédé selon l'une quelconque des revendications précédentes dans lequel l'acide orthophosphorique a une température comprise entre 190 et 240°C avant pulvérisation, de préférence d'environ 200°C.

11. Dispositif de production d'acide polyphosphorique comprenant ::
- une chambre de combustion (1) présentant une partie supérieure et une partie inférieure,
- au moins un brûleur (2) situé dans ladite partie supérieure de la chambre de combustion (1),
- une première entrée (3) pour un combustible et une deuxième entrée (4) pour un air de combustion, situées toutes deux dans ladite partie supérieure de ladite chambre de combustion et agencées pour alimenter en combustible et en air de combustion ledit au moins un brûleur, qui génère une flamme,
**caractérisé en ce qu'**il comprend en outre
- une alimentation en fluide de pulvérisation (5) comprenant de l'acide orthophosphorique qui est agencée pour amener ledit fluide de pulvérisation au niveau dudit au moins un brûleur (2), dans ladite flamme,
- des moyens de séparation (6) permettant de séparer, d'une part, ledit acide polyphosphorique produit dans ladite chambre de combustion (1) et, d'autre part, un mélange de gaz qui est également produit dans ladite chambre de combustion et qui entraîne ledit acide polyphosphorique, et
- une sortie d'acide polyphosphorique (7),au bas de ladite chambre de combustion (1), et une sortie dudit mélange de gaz (8) dans ladite partie inférieure de cette chambre de combustion.

12. Dispositif selon la revendication 11, dans lequel ladite chambre de combustion (1) présente une paroi externe (9) et une paroi interne (10) en carbone amorphe non imprégné entre lesquelles circule un gaz neutre.

13. Dispositif selon la revendication 11, dans lequel ladite chambre de combustion comprend une paroi interne (10) en carbure de silicium, et éventuellement une paroi externe (9) également en carbure de silicium entre lesquelles est définie une double enveloppe (38).

14. Dispositif selon l'une quelconque des revendications 11 à 13, dans lequel lesdits moyens de séparation comprennent un dispositif statique situé dans ladite partie inférieure de la chambre de combustion

15. Dispositif suivant l'une quelconque des revendications 11 à 14, comprenant en outre une cuve de collecte d'acide polyphosphorique (12) reliée à ladite sortie d'acide phosphorique (7) et présentant une tubulure de soutirage (13), reliée à un échangeur de chaleur (14), ledit échangeur de chaleur (14) étant ensuite relié à un réservoir d'entreposage (15) d'acide polyphosphorique et/ou d'autre part à une tubulure de recyclage (16) d'acide polyphosphorique retournant à ladite cuve de collecte (12).

16. Dispositif suivant l'une quelconque des revendications 11 à 15, comprenant en outre une tour de lavage (31) reliée, directement ou indirectement, à ladite sortie du mélange de gaz chauds.

17. Dispositif suivant l'une quelconque des revendications 11 à 16, comprenant en outre un condenseur indirect relié directement ou indirectement à ladite sortie du mélange de gaz chauds.

18. Dispositif suivant l'une quelconque des revendications 11 à 18, comprenant en outre un moyen de refroidissement contrôlé du mélange de gaz chauds relié à ladite sortie du mélange de gaz chauds de la chambre de combustion (1).

19. Dispositif suivant l'une quelconque des revendications 11 à 18, comprenant en outre un contacteur gaz-acide (17) présentant
- une entrée d'un mélange de gaz chauds (18) dans une partie inférieure, reliée à ladite sortie du mélange de gaz chauds (18) de la chambre de combustion (1) éventuellement également reliée audit moyen de refroidissement contrôlé du mélange de gaz chauds,
- une sortie d'un mélange de gaz chauds (23) dans une partie supérieure, éventuellement reliée à ladite tour de lavage (31) ou audit condenseur indirect lorsqu'ils sont présents,
- une entrée d'acide orthophosphorique (24), dans une partie supérieure dudit contacteur (17), et
- une sortie d'acide orthophosphorique (25) et d'éventuelles gouttelettes d'acide polyphosphorique contenant éventuellement un peu d'acide orthophosphorique entraine en contre-courant dudit mélange de gaz, dans ladite partie inférieure.

20. Dispositif selon la revendication 19, dans lequel ledit contacteur gaz-acide (17) comprend en outre un matériau de remplissage au travers duquel percole l'acide orthophosphorique, disposé sur un support perforé.

21. Dispositif selon la revendication 19 ou 20, dans lequel ledit contacteur gaz-acide (17) comprend un diffuseur de gaz (19) présentant une partie supérieure (20) sensiblement perméable aux gaz et une partie inférieure (21) sensiblement perméable aux liquides et éventuellement, dans sa partie supérieure, un débrumiseur (22).

22. Dispositif selon l'une quelconque des revendications 19 à 21, dans lequel ladite sortie d'acide orthophosphorique (25) dudit contacteur gaz-acide (17) est reliée à ladite alimentation en fluide de pulvérisation (5) de ladite chambre de combustion (1).

23. Dispositif selon l'une quelconque des revendications 11 à 22, comprenant un réservoir d'entreposage d'acide orthophosphorique, relié par une tubulure, soit audit contacteur gaz-aide soit à ladite alimentation en fluide de pulvérisation de ladite chambre de combustion (1).

## Patentansprüche

1. Verfahren zur Herstellung von Polyphosphorsäure ausgehend von Lösungen von Orthophosphorsäure, welches Folgendes umfasst:
a) Verbrennung eines Brennstoffes in Anwesenheit von Verbrennungsluft in einer sogenannten Brennkammer (1), welche einen oberen Teil und einen unteren Teil aufweist, wobei die Verbrennung im erwähnten oberen Teil stattfindet, um dort eine Flamme und Verbrennungsgase zu bilden,
**dadurch gekennzeichnet, dass** es ferner Folgendes umfasst:
b) eine Zerstäubung einer Zerstäubungsflüssigkeit, welche Orthophosphorsäure in der erwähnten Flamme umfasst, die im erwähnten oberen Teil der Brennkammer erzeugt wurde, mit einer Polykondensation der erwähnten Orthophosphorsäure, um eine Polyphosphorsäure in Form von Säurenebel zu bilden, begleitet durch eine Bildung von Gasen, die sich mit den Verbrennungsgasen vermischen, um eine vorbestimmte Temperatur zu erreichen, wobei die erwähnte Mischung einen abrupten Temperaturabfall der Verbrennungsgase hervorruft,
c) eine Trennung des erwähnten Polyphosphorsäurenebels und der erwähnten Gasmischung,
d) eine Sammlung der erwähnten Polyphosphorsäure, die so am Boden der erwähnten Brennkammer (1) gebildet wurde, in einem Behälter (12), und
e) einen Austritt der erwähnten Gasmischung im erwähnten unteren Teil der erwähnten Brennkammer (1), aber getrennt von der erwähnten Sammlung von Polyphosphorsäure.

2. Verfahren nach Anspruch 1, wobei die erwähnte Zerstäubungsflüssigkeit, die Orthophosphorsäure enthält, in der erwähnten Flamme in Anwesenheit einer sekundären Flüssigkeit, insbesondere eines inerten Gases, bevorzugt Stickstoff, zerstäubt wird.

3. Verfahren nach Anspruch 1 oder Anspruch 2, wobei die Menge an Verbrennungsluft, bei der erwähnten Verbrennung, stöchiometrisch im Verhältnis zur Brennstoffmenge ist.

4. Verfahren nach irgendeinem der Ansprüche 1 bis 3, welches ferner eine Entnahme der gesammelten Polyphosphorsäure umfasst, einen Wärmeaustausch, der das Abkühlen der so entnommenen Polyphosphorsäure erlaubt, sowie eine Versorgung des erwähnten Behälters (12) mit abgekühlter Polyphosphorsäure.

5. Verfahren nach Anspruch 4, wobei die erwähnte Versorgung mit abgekühlter Polyphosphorsäure auch einen Lagerbehälter (15) speist.

6. Verfahren nach irgendeinem der vorigen Ansprüche, wobei die erwähnte Gasmischung am Ausgang der Brennkammer durch kontrolliertes Abkühlen an P₂O₅ abgereichert wird, um zusätzlich Polyphosphorsäure zu gewinnen.

7. Verfahren nach irgendeinem der Ansprüche 1 bis 6, wobei die erwähnte Gasmischung am Ausgang der Brennkammer, eventuell abgereichert an P₂O₅, durch eine wässrige Waschlösung gewaschen und auf eine Temperatur zwischen 35 und 50 °C abgekühlt wird.

8. Verfahren nach irgendeinem der Ansprüche 1 bis 6, wobei die erwähnte Gasmischung am Ausgang der Brennkammer, eventuell abgereichert an P₂O₅, auf indirektem Weg kondensiert wird.

9. Verfahren nach irgendeinem der vorigen Ansprüche, welches ferner Folgendes umfasst:
- eine Zusammenführung der erwähnten Gasmischung am Ausgang der Brennkammer, eventuell vor dem erwähnten Waschen oder der erwähnten Kondensation oder eventuell nach der oben erwähnten Abreicherung, mit der erwähnten Orthophosphorsäure, vor ihrer Zerstäubung in der erwähnten Brennkammer (1),
- einen Wärmeaustausch zwischen der erwähnten Orthophosphorsäure und der erwähnten Gasmischung, und
- eine Rückgewinnung eventueller Tröpfchen des erwähnten Polyphosphorsäurenebels, die durch die erwähnte Gasmischung beim Ausgang Letzterer aus der Brennkammer mitgeführt wurden.

10. Verfahren nach irgendeinem der vorigen Ansprüche, wobei die Orthophosphorsäure vor der Zerstäubung eine Temperatur von zwischen 190 und 240 °C, bevorzugt von etwa 200 °C, hat.

11. Vorrichtung zur Herstellung von Polyphosphorsäure, welche Folgendes umfasst:
- eine Brennkammer (1), die einen oberen Teil und einen unteren Teil aufweist,
- zumindest einen Brenner (2), der sich im erwähnten oberen Teil der Brennkammer (1) befindet,
- einen ersten Eingang (3) für einen Brennstoff und einen zweiten Eingang (4) für eine Verbrennungsluft, die sich beide im erwähnten oberen Teil der erwähnten Brennkammer befinden und angeordnet sind, um den erwähnten zumindest einen Brenner, der eine Flamme erzeugt, mit Brennstoff und Verbrennungsluft zu versorgen,
**dadurch gekennzeichnet, dass** sie ferner Folgendes umfasst:
- eine Versorgung mit Zerstäubungsflüssigkeit (5), die Orthophosphorsäure enthält, welche angeordnet ist, um die erwähnte Zerstäubungsflüssigkeit auf Höhe des erwähnten zumindest einen Brenners (2) der erwähnten Flamme zuzuführen,
- Trennmittel (6), welche es erlauben, einerseits die erwähnte Polyphosphorsäure, hergestellt in der erwähnten Brennkammer (1), und andererseits eine Gasmischung, die ebenfalls in der erwähnten Brennkammer hergestellt wird und die die erwähnte Polyphosphorsäure mit sich führt, zu trennen, und
- einen Ausgang für Polyphosphorsäure (7), an der Unterseite der erwähnten Brennkammer (1), und einen Ausgang der erwähnten Gasmischung (8) im erwähnten unteren Teil dieser Brennkammer.

12. Vorrichtung nach Anspruch 11, wobei die erwähnte Brennkammer (1) eine Außenwand (9) und eine Innenwand (10) aus nicht imprägniertem amorphem Kohlenstoff aufweist, zwischen denen ein neutrales Gas zirkuliert.

13. Vorrichtung nach Anspruch 11, wobei die erwähnte Brennkammer eine Innenwand (10) aus Siliziumkarbid und eventuell eine Außenwand (9) ebenso aus Siliziumkarbid umfasst, zwischen denen ein Doppelmantel (38) definiert ist.

14. Vorrichtung nach irgendeinem der Ansprüche 11 bis 13, wobei die erwähnten Trennmittel eine statische Vorrichtung umfassen, welche sich im erwähnten unteren Teil der Brennkammer befindet.

15. Vorrichtung nach irgendeinem der Ansprüche 11 bis 14, welche ferner einen Sammelbehälter für Polyphosphorsäure (12) umfasst, verbunden mit dem erwähnten Ausgang für Phosphorsäure (7) und ausgestattet mit einer Entnahmeleitung (13), die mit einem Wärmetauscher (14) verbunden ist, wobei der erwähnte Wärmetauscher (14) danach mit einem Zwischenlagerbehälter (15) für Polyphosphorsäure und/oder andererseits mit einer Rückführleitung (16) für Polyphosphorsäure verbunden ist, welche zum erwähnten Sammelbehälter (12) zurückführt.

16. Vorrichtung nach irgendeinem der Ansprüche 11 bis 15, welche ferner einen Waschturm (31) umfasst, der direkt oder indirekt mit dem erwähnten Ausgang der Mischung heißer Gase verbunden ist.

17. Vorrichtung nach irgendeinem der Ansprüche 11 bis 16, welche ferner einen indirekten Kondensator umfasst, der direkt oder indirekt mit dem erwähnten Ausgang der Mischung heißer Gase verbunden ist.

18. Vorrichtung nach irgendeinem der Ansprüche 11 bis 18, welche ferner ein Mittel zur kontrollierten Kühlung der Mischung heißer Gase umfasst, das mit dem erwähnten Ausgang der Mischung heißer Gase der Brennkammer (1) verbunden ist.

19. Vorrichtung nach irgendeinem der Ansprüche 11 bis 18, welche ferner eine Kontaktvorrichtung Gas-Säure (17) umfasst, die Folgendes aufweist:
- einen Eingang für eine Mischung heißer Gase (18) in einen unteren Teil, verbunden mit dem erwähnten Ausgang der Mischung heißer Gase (18) der Brennkammer (1), eventuell ebenso verbunden mit dem erwähnten Mittel zur kontrollierten Kühlung der Mischung heißer Gase,
- einen Ausgang für eine Mischung heißer Gase (23) in einem oberen Teil, eventuell verbunden mit dem erwähnten Waschturm (31) oder mit dem erwähnten indirekten Kondensator, wenn diese vorhanden sind,
- einen Eingang für Orthophosphorsäure (24), in einen oberen Teil der erwähnten Kontaktvorrichtung (17), und
- einen Ausgang für Orthophosphorsäure (25) und eventuelle Tröpfchen von Polyphosphorsäure, welche eventuell etwas Orthophosphorsäure enthalten, die im Gegenstrom der erwähnten Gasmischung, im erwähnten unteren Teil, mitgeführt wurden.

20. Vorrichtung nach Anspruch 19, wobei die erwähnte Kontaktvorrichtung Gas-Säure (17) ferner ein Füllmaterial umfasst, durch das die Orthophosphorsäure sickert, angeordnet auf einem perforierten Träger.

21. Vorrichtung nach Anspruch 19 oder 20, wobei die erwähnte Kontaktvorrichtung Gas-Säure einen Gasverteiler (19) umfasst, der einen deutlich gasdurchlässigen oberen Teil (20) und einen deutlich flüssigkeitsdurchlässigen unteren Teil (21) und eventuell, in seinem oberen Teil, einen Tropfenabscheider (22) aufweist.

22. Vorrichtung nach irgendeinem der Ansprüche 19 bis 21, wobei der erwähnte Ausgang für Orthophosphorsäure (25) der erwähnten Kontaktvorrichtung Gas-Säure (17) mit der erwähnten Versorgung mit Zerstäubungsflüssigkeit (5) der erwähnten Brennkammer (1) verbunden ist.

23. Vorrichtung nach irgendeinem der Ansprüche 11 bis 22, welche einen Zwischenlagerbehälter für Orthophosphorsäure umfasst, verbunden über eine Leitung, entweder mit der erwähnten Kontaktvorrichtung Gas-Säure oder mit der erwähnten Versorgung mit Zerstäubungsflüssigkeit der erwähnten Brennkammer (1).

## Claims

1. A method for producing polyphosphoric acid from orthophosphoric acid solutions, comprising:
a) a combustion of a fuel in the presence of combustion air in a so-called combustion chamber (1), having an upper part and a lower part, the combustion taking place in said upper part to form a flame and combustion gases therein,
**characterized in that** it further comprises
b) spraying a spray fluid comprising orthophosphoric acid in said flame produced in said upper part of the combustion chamber, with a polymerization-condensation of said orthophosphoric acid to form a polyphosphoric acid in the form of an acid mist accompanied by a gas formation mixing with the combustion gases to reach a predetermined temperature, said mixture causing a sharp decrease in the temperature of the combustion gases,
c) separating said polyphosphoric acid mist and said gas mixture,
d) collecting said polyphosphoric acid thus formed at the bottom of said combustion chamber (1) in a basin (12), and
e) expelling said gas mixture in said lower part of said combustion chamber (1), but separated from said collection of polyphosphoric acid.

2. The method according to claim 1, wherein said spray fluid comprising the orthophosphoric acid is sprayed in said flame in the presence of a secondary fluid, in particular an inert gas, preferably nitrogen.

3. The method according to claim 1 or claim 2, wherein during said combustion, the quantity of combustion air is stoichiometric relative to the quantity of fuel.

4. The method according to any one of claims 1 to 3, further comprising withdrawing collected polyphosphoric acid, a heat exchange allowing cooling of the polyphosphoric acid thus withdrawn and the supply of said basin (12) with cooled polyphosphoric acid.

5. The method according to claim 4, wherein said supply of cooled polyphosphoric acid also supplies a storage reservoir (15).

6. The method according to any one of the preceding claims, wherein said gas mixture at the outlet of the combustion chamber is depleted in P₂O₅ by controlled cooling for an additional recovery polyphosphoric acid.

7. The method according to any one of claims 1 to 6, wherein said mixture of gases at the outlet of the combustion chamber, optionally depleted in P₂O₅, is washed with an aqueous wash solution and cooled to a temperature comprised between 35 and 50°C.

8. The method according to any one of claims 1 to 6, wherein said gas mixture at the outlet of the combustion chamber, optionally depleted in P₂O₅ is condensed indirectly.

9. The method according to any one of the preceding claims, further comprising:
- placing said gas mixture in contact at the outlet of the combustion chamber, optionally prior to the washing or said condensation or optionally after the aforementioned depletion, with said orthophosphoric acid, before it is sprayed in the combustion chamber (1),
- a heat exchange between said orthophosphoric acid and said gas mixture, and
- an optional recovery of droplets of said polyphosphoric acid mist brought in by said gas mixture at the outlet of the latter from the combustion chamber.

10. The method according to any one of the preceding claims, wherein the orthophosphoric acid has a temperature comprised between 190 and 240° before spraying, preferably about 200°C.

11. A device for producing polyphosphoric acid, comprising:
- a combustion chamber (1) having upper part and a lower part,
- at least one burner (2) situated in said upper part of the combustion chamber (1).
- a first inlet (3) for a fuel and a second inlet (4) for a combustion air, both situated in the upper part of said combustion chamber and arranged to supply fuel and combustion air to said at least one burner, which generates a flame,
**characterized in that** it further comprises
- a supply of spray fluid (5) comprising the orthophosphoric acid that is arranged to bring said spray fluid to said at least one burner (2), in said flame,
- separating means (6) making it possible to separate, on the one hand, said polyphosphoric acid produced in said combustion chamber (1), and on the other hand, a gas mixture that is also produced in said combustion chamber and that drives said polyphosphoric acid, and
- a polyphosphoric acid outlet (7), at the bottom of said combustion chamber (1), and an outlet for said gas mixture (8) in said lower part of this combustion chamber.

12. The device according to claim 11, wherein said combustion chamber (1) has an outer wall (9) and an inner wall (10) made from non-impregnated amorphous carbon between which a neutral gas circulates.

13. The device according to claim 11, wherein said combustion chamber comprises an inner wall (10) made from silicon carbide, and optionally an outer wall (9) also made from silicon carbide, between which walls a double enclosure (38) is defined.

14. The device according to any one of claims 11 to 13, wherein said separating means comprise a static device situated in said lower part of the combustion chamber.

15. The device according to any one of claims 11 to 14, further comprising a polyphosphoric acid collection basin (12) connected to said polyphosphoric acid outlet (7) and having a withdrawal tubing (13), connected to a heat exchanger (14), said heat exchanger (14) being connected to a storage reservoir (15) for polyphosphoric acid and/or recycling tubing (16) for polyphosphoric acid returning to said collection basin (12).

16. The device according to any one of claims 11 to 15, further comprising a scrubbing tower (31) directly or indirectly connected to said hot gas mixture outlet.

17. The device according to any one of claims 11 to 16, further comprising an indirect condenser directly or indirectly connected to said outlet for the hot gas mixture.

18. The device according to any one of claims 11 to 18, further comprising a means for controlled cooling of the hot gas mixture connected to said outlet for the hot gas mixture of the combustion chamber (1).

19. The device according to any one of claims 11 to 18, further comprising a gas-acid contactor (17) having
- an inlet for a hot gas mixture (18) in a lower part, connected to said outlet for the hot gas mixture (18) of the combustion chamber (1) optionally also connected to said controlled cooling means for the hot gas mixture,
- an outlet for a hot gas mixture (23) in an upper part, optionally connected to said washing tower (31) or to said indirect condenser when they are present,
- an orthophosphoric acid inlet (24), in an upper part of said contactor (17), and
- an outlet (25) for orthophosphoric acid and any polyphosphoric acid droplets optionally containing a little bit of orthophosphoric acid [driven] in countercurrent with respect to said gas mixture, in said lower part.

20. The device according to claim 19, wherein said gas-acid contactor (17) further comprises a filling material through which the orthophosphoric acid percolates, arranged on a perforated support.

21. The device according to claim 19 or 20, wherein said gas-acid contactor (17) comprises a gas diffuser (19) having an upper part (20) that is substantially permeable to the gases and a lower part (21) that is substantially permeable to liquids and optionally, in its upper part, a demister (22).

22. The device according to any one of claims 19 to 21, wherein said orthophosphoric acid outlet (25) of said gas-acid contactor (17) is connected to said spray fluid supply means (5) of said combustion chamber (1).

23. The device according to any one of claims 11 to 22, comprising an orthophosphoric acid storage reservoir, connected by a tubing, either to said gas-acid contactor or to said spray fluid supply means of said combustion chamber (1).
